# EUROPEAN PATENT APPLICATION

(11) **EP 0 697 593 A1**
(43) Date of publication of application: **21.02.1996**
(21) Application number: 94810477.3
(22) Date of filing: 17.08.1994
(51) Int. Cl.: G01N 27/16

(54) **Low power catalytic combustible gas detector**

(71) Applicant: BACHARACH, INC., Pittsburgh Pennsylvania 15238 (US)
(72) Inventor: Yannopoulos, Lymperios N., Pittsburgh, Pennsylvania 15235 (US); Novack, Robert L., Evans City, Pennsylvania 16033 (US); Shine, Grace L., Pittsburgh, Pennsylvania 15229 (US)
(74) Representative: Schick, Carl

(57) **Abstract**

A low power catalytic combustible gas detector capable of operating at temperatures of 500°C. or higher and at electrical power levels no greater than 60 mW is disclosed. A planar substrate (2) includes active (16) and reference (44) paddles, respectively, suspended over an associated open well (8, 10). Resistive traces (30, 39) are provided in each paddle and extend over an electrode arm (18, 46) supporting the paddle to bonding pads (32, 34; 60, 62) on the substrate. One or more cross bars (22, 24; 50, 52) also support each paddle over the well. A catalytically active material (80) is coated on an upper surface of the active paddle and a catalytically inactive material is coated on an upper surface of the reference paddle.

## Description

### BACKGROUND OF THE INVENTION

### 1. Field of the Invention

This invention relates to combustible gas detectors and, more particularly, to planar, low power catalytic combustible gas detectors.

### 2. Description of the Prior Art

The use of catalytic sensors to measure the concentration of combustible or flammable gases is well-known. Typically, a catalytic sensor includes a resistive element coated with a catalytic material which will react with a particular combustible gas. An electric current is passed through the resistive element at an amperage sufficient to heat the catalytic coating to a desired operating temperature. As the combustible gas passes over the sensor and contacts the catalytic coating, it will chemically react with the catalyst in an exothermic reaction, add heat to the sensor and proportionally raise the resistance of the resistive element therein. Thus, the increase in resistance of the sensor is directly related to the concentration of the gas contacting the sensor. The catalytic sensor is sensitive to the overall energetics of the combustion reaction at the catalytic coating.

Catalytic sensors have been used in both non-isothermal and isothermal modes of operation. In the non-isothermal mode of operation, the temperature of the sensing element is allowed to rise as a result of the chemical reaction of the gas at the catalyst surface. Under diffusion limiting conditions, the concentration of the combustible gas is derived from the increase in temperature. In the isothermal mode of operation, the temperature of the sensing element is maintained constant during the catalytic reaction, and the reaction energy is obtained in terms of a difference in electrical power dissipated by the sensor under reaction and non-reaction conditions.

A change in operating characteristics of the sensor can be detected electrically in a variety of ways to provide a direct reading of the concentration of the gas contacting the sensor. In a common arrangement, a catalytic sensor, combining an active element coated with a catalyst in series with a catalytically inert reference element, is provided as one side of a Wheatstone bridge. In the non-isothermal mode of operation, power is supplied to the circuit to heat the reference and active elements to their operating temperature and the values of the fixed resistors in the other side of the Wheatstone bridge are selected to balance the bridge in air. When a reaction occurs on the active element, the rise in temperature and the resulting change in resistance of the active element causes an out-of-balance voltage across the bridge. This voltage is proportionally related to the concentration of gas at the active element. In the isothermal mode of operation, the current of the Wheatstone bridge is monitored by a feedback circuit which controls the electrical power supplied to the active element. In this manner, the heat generated during the reaction at the active element is sensed by the feedback circuit and the electrical power is reduced to maintain the active element at a constant temperature. This change of power necessary to operate the circuit at the constant temperature is proportional to the concentration of the gas contacting the active element. See Gentry, S. J. and Jones, T. A., "The Role Of Catalysis In Solid-State Gas Sensors", Sensors and Actuators, 10 (1986) 141-163 and U.S. Patent Nos. 4,541,988 and 5,055,269.

For detecting certain of the more difficult to burn combustible gases, such as methane, the catalytic material on the active element of a catalytic sensor must be heated to at least 500°C. for a palladium based catalyst. Otherwise, the gas will not react with, i.e., be oxidized by, the catalytic material. Platinum based catalysts must be heated to at least 600°C. for proper combustion. Such high temperatures of operation pose no major problem for laboratory or other larger gas sensors operating from line current. However, there has been a demand for portable gas detectors which run on batteries and which can operate for reasonably long periods of time. It has, therefore, been a goal of the gas sensor industry to develop gas sensors which operate at low power levels and which are compatible with portable gas detectors.

Some of the available catalytic gas sensors operate as low as 100 mW per element. These are small, spherical bead type catalytic sensors having a wound wire heating element embedded therein. Due to the practical difficulties in forming small platinum wire coils of high resistance, this power level appears to represent the lower limit of power consumption in a bead type sensor. The difficulties with such sensors may result from the loss of mechanical wire strength with decreasing diameter. For reasonable operating voltages, the corresponding resistance must be increased at low power levels. This demands that the coil include more turns of very fine wire and results in difficult manufacturing requirements.

Recent advances in silicon wafer microfabrication techniques have opened new possibilities for additional power reduction in the gas sensor area. With micro-sized sensors, the operating period of portable instruments can be increased for a given battery size. It also provides the opportunity for smaller instruments for a given operating period. In a planar microelectronic configuration, the active element can also sense the temperature of the device. The active element can be in the form of a film which is electrically insulated from the catalyst-bearing outer surface.

Numerous planar configurations for both catalytic and solid state film gas detectors have been proposed. See, for example, the arrangements disclosed in European Patent Application No. 89302810.0; U.S. Patents Nos. 4,343,768, 4,953,387, 4,984,446, 4,991,424, 5,003,812 and 5,012,671; Gall, M., "The Si Planar Pellistor: a Low-power Pellistor Sensor in Si Thin-film Technology", Sensors and Actuators B, 4 (1991) 533-538; and Delapierre, G., et al., "A New Microsensor for Environmental Measurements", Sensors and Actuators B, 4 (1991) 539-543. While the prior art has reduced to an extent the power consumption of such gas sensors, it has not yet provided a catalytic-based gas sensor which can operate in the 60 mW range or less. In addition, prior art arrangements have not provided for operation of the active element at the higher temperature levels, such as 500°C. or higher, necessary for oxidizing methane and other less combustible gases.

Therefore, it is an object of the present invention to provide a small sized, planar, catalytic gas sensor which can operate at a low power range, such as at 60 mW or less, and which can also heat the catalytic material on the active element of the sensor to the high temperature ranges necessary to react with methane and other less combustible gases. It is a further object of the present invention to provide such a gas sensor in an arrangement which can be manufactured readily in large quantities, which provides consistent measurements over time and which provides consistent measurements from sensor to sensor.

### SUMMARY OF THE INVENTION

Accordingly, we have invented a low power catalytic combustible gas detector which includes a planar substrate having rectangular active and reference wells extending through the substrate and separated from each other by at least 300 microns. A thin, insulating layer is formed on the upper surface of the substrate. A planar, rectangular paddle is suspended over each well in about a midpoint thereof and substantially aligned with the insulating layer. Each paddle is connected to the insulating layer by a planar electrode arm extending from a side of the paddle and by at least one planar cross bar support extending from another side of the paddle. The paddle electrode arms and cross bar supports are formed of an insulating material. Each paddle also includes a resistive trace embedded therein and formed of at least one thin meandering metal ribbon. The insulating layer includes a pair of bonding pads embedded therein and adjacent each electrode arm. Two metal ribbon electrodes are embedded within the electrode arm and extend between separate of the bonding pads and separate ends of the resistive trace.

The active paddle is coated on an upper surface thereof with a catalytically active material and the reference paddle is coated on an upper surface with a catalytically inactive material. The reference and active paddles each have sides at least 100 microns in length, but no greater than 300 microns in length. The active and reference wells each define an open area having a surface area at least ten times as large as the surface area of the associated active and reference paddles. The active and reference electrode arms and the active and reference cross bar supports each have a width substantially narrower than the length of any side of the active and reference paddles, respectively. In this manner, the coatings on the paddles can be raised to temperatures of 500°C. or higher when the resistive traces therein carry electrical power of no greater than 60 mW.

In a preferred embodiment, the paddles, the electrode arms and the cross bar supports are each formed of the same insulating material as the insulating layer on the substrate. In addition, the substrate can be formed of silicon and the insulating layer, the paddles, the electrode arms and the cross bar supports can be formed of silicon dioxide. The resistive traces and the paddles can include a pair of parallel platinum ribbon traces and the metal ribbon electrodes and bonding pads can be formed of gold. The catalytically active material can be a palladium based material or a platinum based material.

In one embodiment, the detector includes a pair of active cross bar supports and a pair of reference cross bar supports, with the cross bar supports extending perpendicularly from an associated paddle at opposed corners along a side opposite the side to which the associated electrode arm is connected. In another embodiment, the gas detector can include four active cross bar supports and four reference cross bar supports, with each cross bar support connected to a different corner of an associated paddle and extending diagonal to the insulating layer on the substrate.

### BRIEF DESCRIPTION OF THE DRAWINGS

FIG. 1 is a perspective view of a first embodiment of a low power catalytic combustible gas detector in accordance with the present invention;
FIG. 2 is a top plan view of the gas detector shown in FIG. 1;
FIG. 3 is an enlarged view of the active paddle in the gas detector shown in FIG. 2;
FIG. 4 is a section taken along lines IV-IV in FIG. 2;
FIG. 5 is a section taken along lines V-V in FIG. 3;
FIG. 6 is a section taken along lines VI-VI in FIG. 3;
FIG. 7 is a section taken along lines VII-VII in FIG. 3;
FIG. 8 is a top plan view of a second embodiment of a low power catalytic combustible gas detector in accordance with the present invention;
FIG. 9 is a graph of a heating and conditioning schedule applied to the gas detector shown in FIGS. 1-7;
FIG. 10 is a circuit diagram of a constant resistance circuit used in testing the operation of the gas detector shown in FIGS. 1-7;
FIG. 11A is a graph of the output signal (expressed as power change) versus time of the active and reference elements of a gas sensor having a palladium catalytic coating and exposed to 2.5% methane in air;
FIG. 11B is a graph similar to FIG. 11A of the output signal versus time of the active and reference elements of a gas sensor having a palladium catalytic coating and exposed to 1.0% methane in air;
FIG. 12 is a graph of the gas concentration versus sensor signal for a gas sensor exposed to methane, hydrogen and propane in air;
FIG. 13A is a graph of the output signal (expressed as power change) versus time of the active element of a gas sensor having a platinum catalytic coating and exposed to 2.5% methane in air;
FIG. 13B is a graph similar to FIG. 13A of the output signal versus time of the active element of a gas sensor having a platinum catalytic coating and exposed to 1.0% methane in air; and
FIG. 14 is a graph showing the change in response of a palladium based gas sensor with a change in relative humidity.

### DETAILED DESCRIPTION OF THE PREFERRED EMBODIMENTS

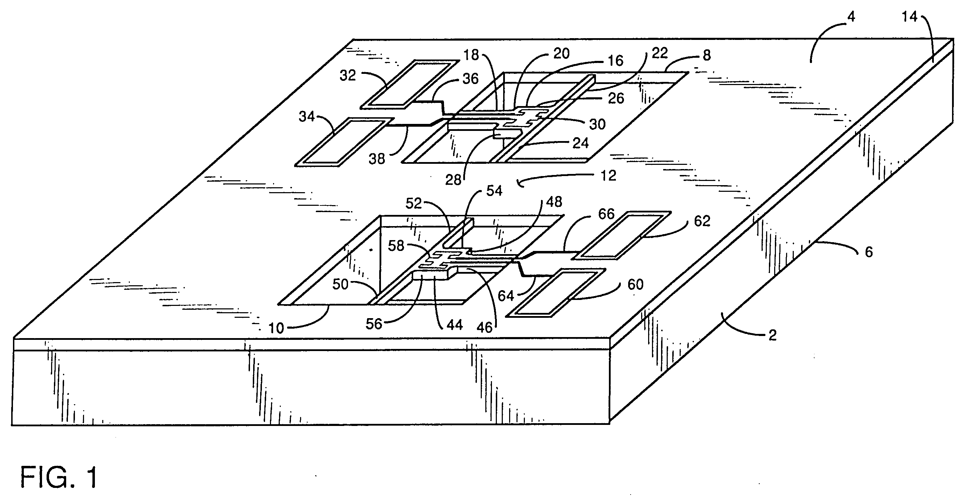

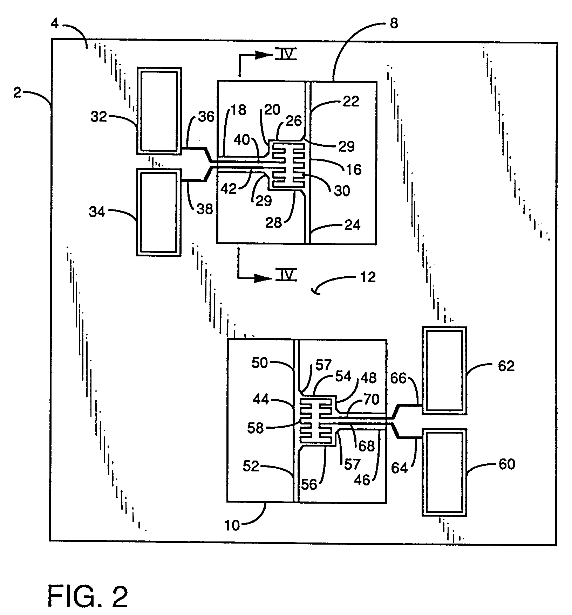

A first embodiment of a low power catalytic combustible gas detector in accordance with the present invention is shown in FIGS. 1-7. The gas detector includes a planar microchip substrate 2, such as a thin wafer made of silicon or other semiconductor material, carrying the remaining elements of the invention on an upper surface 4 thereof. In the embodiment shown in the drawings, the substrate 2 is a thin, square silicon chip having sides which are 3.4 mm (3400 microns) long and a thickness of about 300 microns (12 mils). A pair of square or rectangular etched areas or, preferably, clear through wells are provided in the substrate 2 in a midportion thereof. Preferably, a pair of wells extend through the substrate 2 from the upper surface 4 to a lower surface 6 thereof. These wells are associated with active and reference elements of the gas sensor and will hereinafter be referred to as active well 8 and reference well 10. Each well 8, 10 is approximately 1,125 microns square and the wells 8, 10 are spaced from each other by a 600 micron wide rectangular separating portion 12 of the substrate 2.

The entire upper surface 4 of the substrate 2 is coated with a thin insulating layer 14, such as a layer of SiO₂ chemically deposited on a silicon substrate. A small, planar paddle, also formed of a thin layer of insulating material such as SiO₂, is suspended over each of the active and reference wells 8, 10 in about a midpoint thereof and substantially aligned with the insulating layer 14. Each paddle is preferably square or rectangularly shaped and covers an area substantially smaller than the area defined by an associated well 8, 10. In a preferred embodiment, the paddles are square shaped and have sides of about 225 microns in length, but no greater than 300 microns in length. In addition, the sides of each paddle should be at least 100 microns in length. The active well 8 and reference well 10 define open areas at least ten times larger than the surface area of the paddles. Each paddle is connected to the insulating layer 14, and thus supported by the substrate 2, through a planar electrode arm support, also formed of an insulating material such as SiO₂. The electrode arm support extends perpendicularly from one side of the paddle to the insulating layer 14. One or more planar cross bar supports, also formed of an insulating material such as SiO₂, extend from another side of each paddle to the insulating layer 14 on the substrate 2. The electrode arms and the cross bar supports are substantially narrower than the paddles.

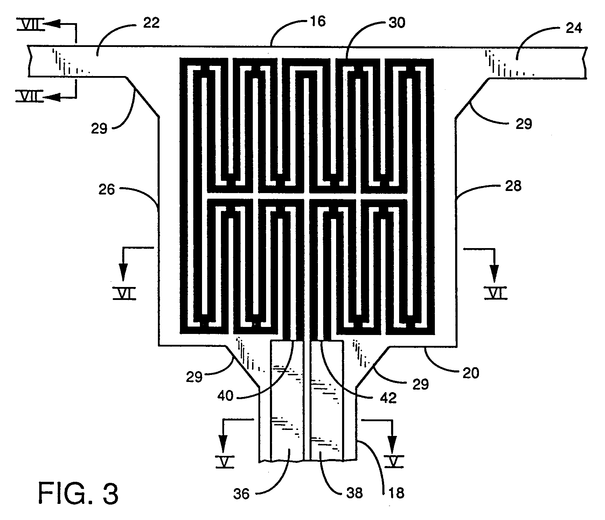

Each paddle includes a resistive trace embedded therein and formed of one or more thin, meandering or serpentine-shaped metal ribbons. As shown in FIG. 3, the resistive trace includes a pair of parallel metal ribbons. The insulating layer 14 includes a pair of bonding pads embedded therein and adjacent the connection of the electrode arm to the insulating area. Metal ribbon electrodes are embedded within the electrode arm and extend between the bonding pads and the ends of the resistive trace in the paddle.

Referring again to FIGS. 1-7, an active paddle 16 is suspended over the active well 8 and includes an active electrode arm 18 extending from side 20 of the active paddle 16 and active cross bar supports 22, 24 extending from sides 26 and 28, respectively, at the corners opposite side 20 and perpendicularly thereto. As shown more clearly in FIG. 3, the active electrode arm 18 and the active cross bar supports 22, 24 can include, for additional strength, flared areas 29 where they are attached to the active paddle 16. The active paddle 16 includes an active resistive trace 30, the insulating layer 14 includes active bonding pads 32 and 34, and active electrodes 36 and 38 extend from active bonding pads 32 and 34, respectively, along active electrode arm 18, and to ends 40 and 42 of active resistive trace 30.

Similarly, a reference paddle 44 is suspended over the reference well 10 and includes a reference electrode arm 46 extending from side 48 of the reference paddle 44 and reference cross bar supports 50, 52 extending from sides 54 and 56, respectively, at the corners opposite side 48 and perpendicularly thereto. Flared areas 57 can be provided for additional strength where the reference electrode arm 46 and the reference cross bar supports 50, 52 are attached to the reference paddle 44. The reference paddle 44 includes a reference resistive trace 58, the insulating layer 14 includes reference bonding pads 60 and 62, and reference electrodes 64 and 66 extend from reference bonding pads 60 and 62, respectively, along reference electrode arm 46, and to ends 68 and 70 of reference resistive trace 58. While the active paddle 16 having the catalyst must ignite the combustible gas, it is not desirable that the reference paddle 44 ignite the combustible gas because it is the ignition process that provides a differential signal between the active and reference paddles, 16 and 44, respectively. The insulating material that surrounds the reference resistive trace 58 of reference paddle 44 provides protection of the reference resistive trace 58 from igniting easily combustible gases such as hydrogen and thereby prevents undesirable hydrogen burning of the reference resistive trace 58 of the reference paddle 44.

In the embodiment shown in FIGS. 1-7, the active paddle 16 and reference paddle 44 each are square in configuration, having outer sides of about 225 microns long and a thickness of about 10 microns. The active and reference paddles 16 and 44 are each spaced from the substrate 2 within the active well 8 and reference well 10, respectively, by a distance of about 450 microns. The planar configuration and low power allow the active and reference paddles 16 and 44 to be in close proximity to each other without thermally interfering with each other (i.e., thermal cross talk). This is unlike prior art bead type sensors which could not be so closely spaced without developing the unwanted thermal cross talk unless some type of thermal barriers were present. The electrode arms 18 and 46 are each about 75 microns in width and 225 microns in length, and have a thickness of about 10 microns. The active electrodes 36, 38 and reference electrodes 64, 66 are each preferably a gold film 25 microns wide and 0.24 micron thick and sandwiched in about the middle of the insulating material forming the electrode arms 18 and 46. The cross bar supports 22, 24, 50 and 52 are each about 450 microns long, 10 microns wide and 5 microns thick. The active and reference bonding pads 32, 34, 60 and 62 are each preferably a rectangular gold pad having outer dimensions of about 300 microns by 600 microns, and a thickness of about 0.24 micron. The active resistive trace 30 and reference resistive trace 58 are preferably formed of a pair of platinum traces, with each platinum trace 5 microns wide and 0.5 micron thick, and cover a square area on the associated active and reference paddles 16 and 44 of about 205 microns on each side.

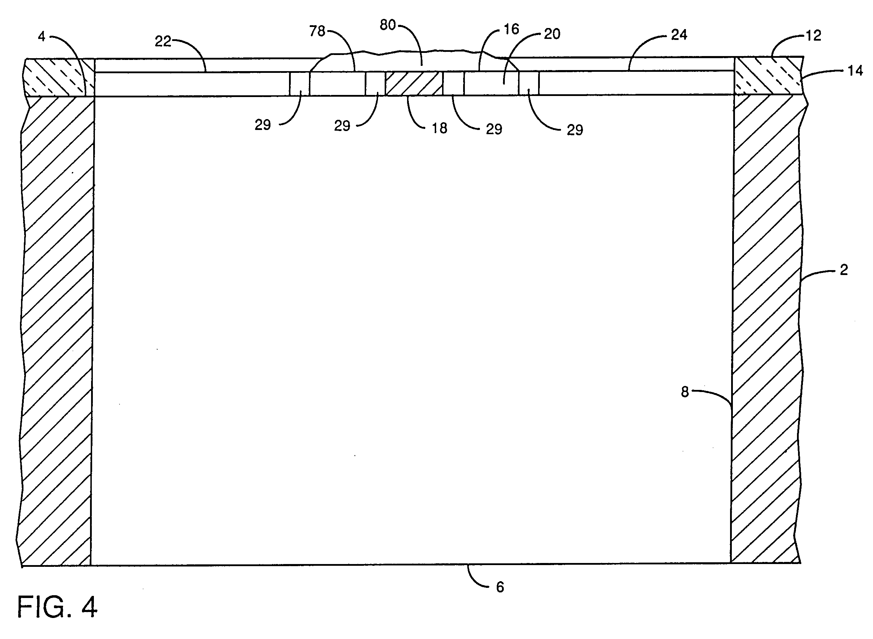

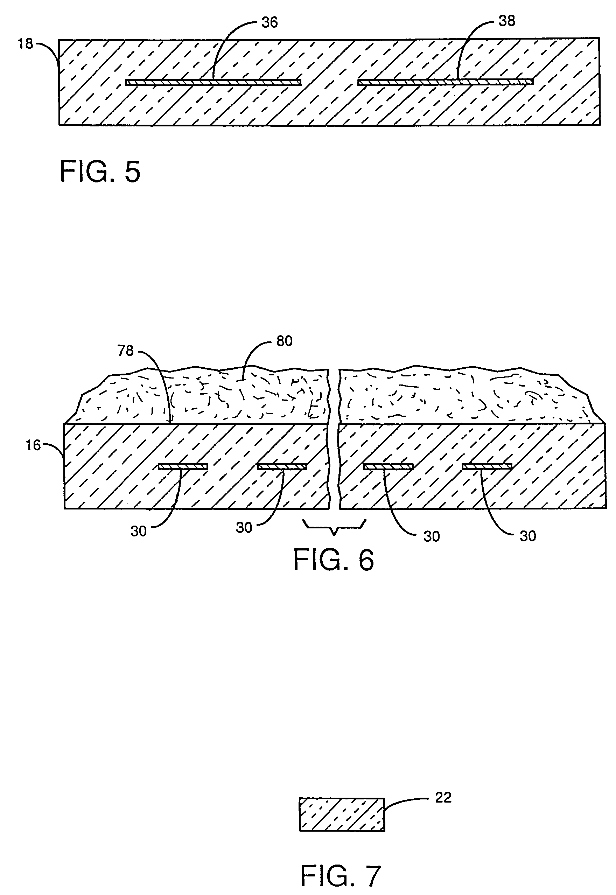

As shown more clearly in FIGS. 4 and 6, the active paddle 16 is coated on its upper surface 78 with a layer 80 of a gas sensing catalyst formulation. While a variety of catalysts can be used, it is preferred to use a palladium based catalyst formulation, operating at 500°C. or higher, or a platinum based catalyst formulation, operating at 600°C. or higher. The reference paddle 44 is coated on its upper surface with a catalytically inert coating having similar thermal emission characteristics.

Multiple gas detectors described above can be fabricated from a 4" by 4" by 0.012" silicon wafer in a stepwise manner using the well-known silicon processing technology of chemical etching, trimming, masking and physicochemical evaporation techniques. The platinum resistive traces 30 and 58 on the active paddle 16 and reference paddle 44, the gold active and reference electrodes 36, 38, 64 and 66 on the active and reference electrode support arms 18 and 46, and the various gold bonding pads 32, 34, 60 and 62 are made by RF-sputtering. The metal film or ribbon portions are sandwiched between chemically vapor deposited insulating layers of silicon dioxide. The formation of the insulating layer 14 on the substrate 2, the removal of portions of the substrate 2 to form the active and reference wells 8 and 10, and the formation of the paddles, electrode support arms and cross bar supports, are carried out using standard methods. After the silicon wafer processing steps have been carried out, the separate chips are cut or diced from the larger wafer, gold wire leads are bonded to the gold bonding pads on each chip, and the chips are bonded to standard carriers. Thereafter, the catalyst formulation can be applied to the upper surface 78 of each active paddle 16. The inert coating can also be applied to each reference paddle 44.

Through the structure shown in FIGS. 1-7, with the paddles suspended over an open well and isolated from the remainder of the substrate and with thin arms supporting the paddles over the wells, it is possible to develop the high temperatures necessary to raise the catalytic material on the active element to the desired high operating temperatures, yet use only a small amount of electrical power, in the 60 mW range or less. By this arrangement, loss of generated heat in the paddles is minimized and the power expended in the paddles can be used primarily to heat the catalytic coating. The structure is strong enough to withstand the temperatures developed and concentrate the heat in the resistive trace areas of the paddles with minimum losses. Also, the paddles provide the high surface area, yet minimum material amounts needed for acceptable gas sensitivities. For the dimensions and materials described above, the heat losses for the various elements operating at 650°C., a higher than normal operating temperature, were calculated, using well-known thermodynamic principles, as follows:

| | | |
|---|---|---|
| Square Pt trace: | Q(radiation) | = 4.5 mW |
| | Q(conduction) | = 18.2 mW |
| Electrode Arm Support: | Q(conduction) | = 19.0 mW |
| Cross Bar Support: | Q(conduction) | = 6.4 mW |
| | Total: | = 48.1 mW |

Thus, it can be shown that this arrangement requires a calculated 48.1 mW per sensor element to generate an operating temperature of 650°C. in the catalyst layer.

The cross bar supports that bridge the square paddles to the silicon substrate do not contribute much to the total heat loss. These cross bar supports are included primarily to avoid flexure of the paddles during sensor operation and also facilitate the application of the coatings on the upper surface of the paddles. The electrode arms not only provide a primary support to the paddles suspended over the wells, but also carry the electrical connections between the resistive heater traces on the paddles and the bonding pads.

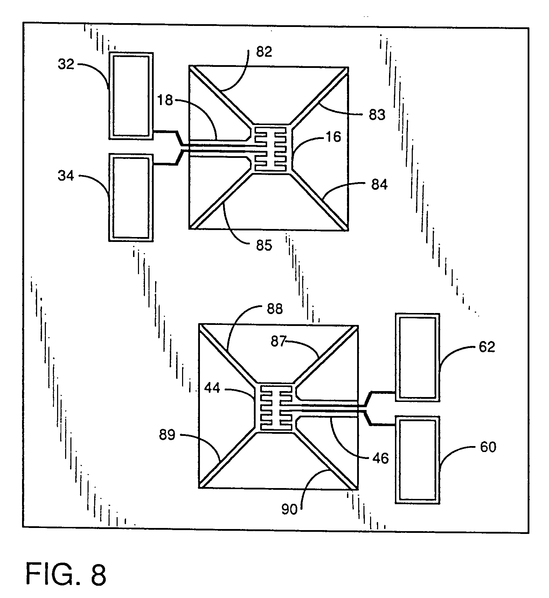

Variations in the sizes and arrangements of the square paddles, electrode arms and cross bar supports are possible, provided the deviations do not require the expenditure of power in excess of 60 mW. One optional arrangement is shown in FIG. 8. This embodiment is nearly identical to that shown in FIGS. 1-7 above. However, rather than two cross bar supports, one cross bar support extends diagonally from a corner of the paddle to an adjacent corner of the associated well. In particular, the active paddle 16 includes active cross bar supports 82, 83, 84 and 85 extending from its four corners, respectively, and over the active well 8 to the substrate 2. Similarly, the reference paddle 44 includes reference cross bar supports 87, 88, 89 and 90 extending from its four corners, respectively, and over the reference well 10 to the substrate 2. While this arrangement will slightly increase the power requirements for the overall operation of the sensor, it will provide a more stable support for the paddles. The increase in power requirements could be reduced by making the cross bar supports thinner, which is possible when using four such supports.

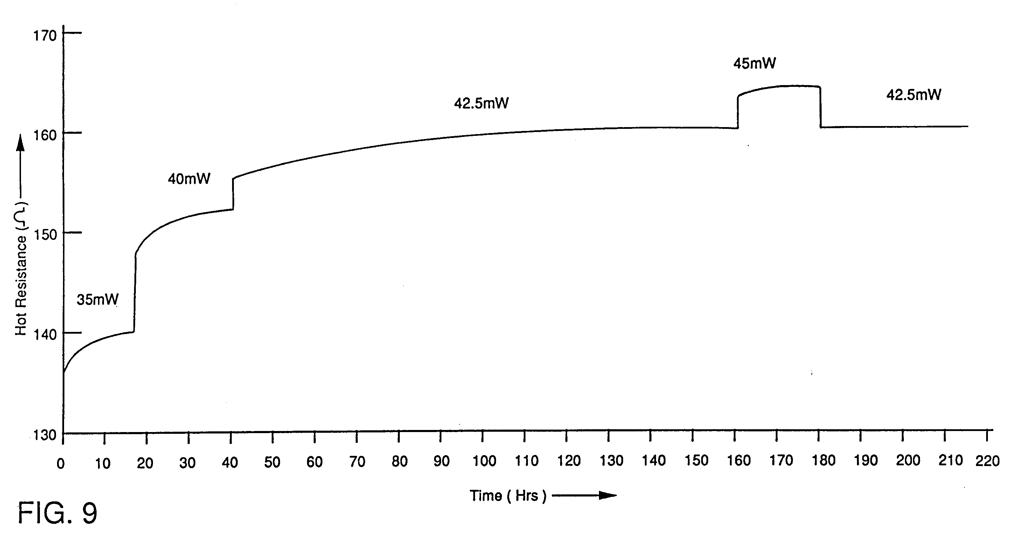

Sensors in accordance with the materials, configurations and dimensions discussed above in connection with FIGS. 1-7, were manufactured and tested. After the sensors were manufactured, they were initially conditioned in a stepwise heating arrangement to generate stable resistance characteristics in the elements. Using a standard constant power feedback circuit, the sensors were subjected to the electrical heating schedule shown in FIG. 9. Electrical current was passed through the resistive traces to heat them to a desired level. The sensors were initially heated at a 35 mW level, then heated at a 40 mW level, then heated at a 42.5 mW level, then reheated at the 45 mW level, and then heated at a 42.5 mW level for the final heating period. It was found that the conditioned sensors had a stabilized average room temperature resistance of about 78.5 ohms per heater element and a temperature coefficient of resistance of about 0.0020. Since the sensors are intended to operate at temperatures of 500°C. or higher, it is desirable to carry out this conditioning of the sensors so that they can thereafter operate in their normal intended manner at high temperatures. It is believed that the conditioning process can be substantially shortened if the wafer (before dicing and before coating of the paddles) is heated in an oven at up to 600°C. for several days. This can reduce the time needed for the electrical conditioning and speed the overall production process.

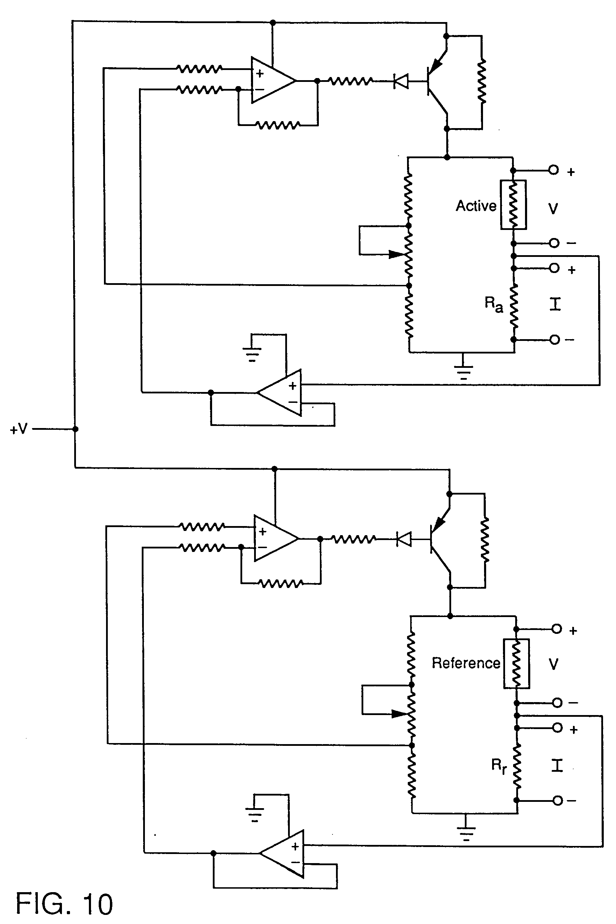

The coated chips were then heated and gas tested in a constant temperature mode of operation using a constant resistance circuit of the type shown in FIG. 10. The active and reference elements were placed in separate Wheatstone bridge circuits and operated at desired power levels. Each of the reference and active elements were independently heated to the desired operating temperature as determined by the resistance and temperature coefficients of resistance of the paddles. The power supplied to the active element was determined by measuring both the voltage across the active element and the current through resistor Rₐ in series with the active element in one arm of one Wheatstone bridge. Similarly, the power supplied to the reference element was determined by measuring both the voltage across the reference element and the current through resistor Rᵣ in series with the reference element in one arm of the other Wheatstone bridge. When the active and reference elements were exposed to a particular gas, the heat given off due to the catalytic reaction is electrically compensated by the constant temperature mode circuit in order to maintain the same temperature of operation. Thus, the combustion heat which is related to the concentration of the combustible gas can be determined by the change in electrical power expended.

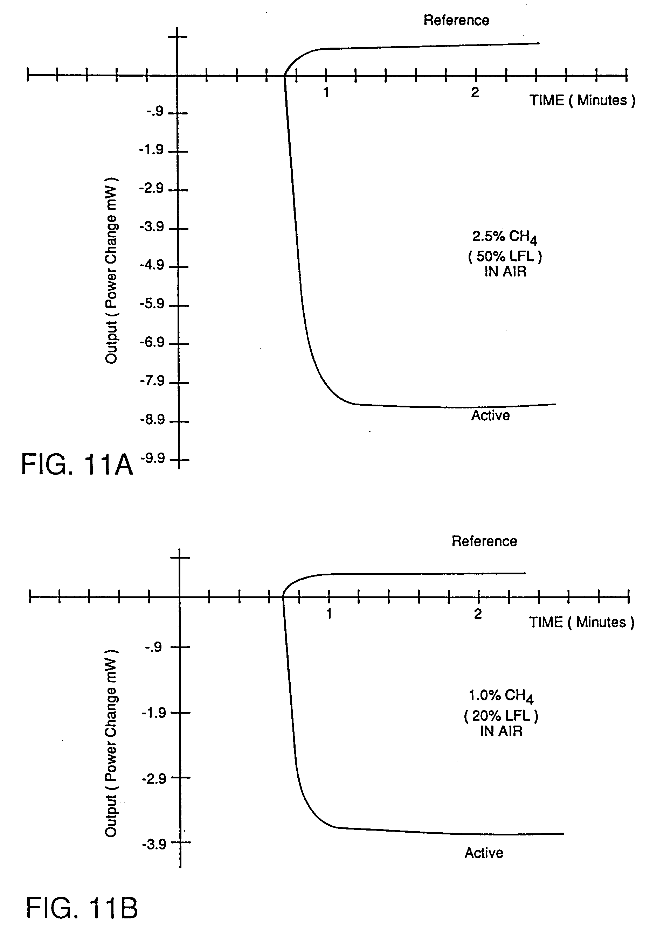

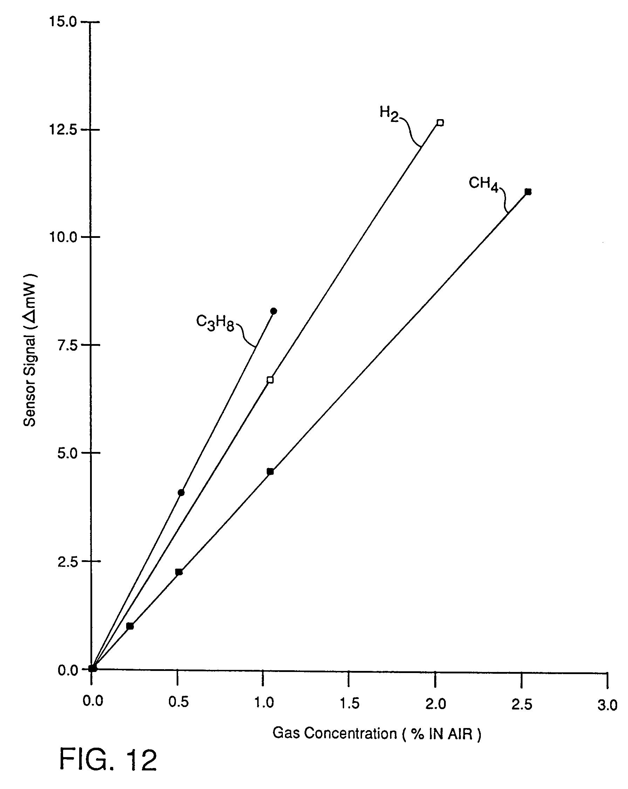

Typical output signals for a palladium based catalytic sensor are shown in FIGS. 11A and 11B for the measurement of methane (CH₄). Methane was used because it is one of the more difficult of the combustible gases to ignite. The values in FIGS. 11A and 11B show the good sensitivity (around 5.0 mV/%LFL of CH₄) of the sensor. This level exceeds the sensitivity of most of the commercial catalytic bead sensors of much higher power consumption. The observed drift in air of this sensor was small, on the order of less than 1% LFL over 24 hours. The linearity of the signals developed by this sensor is shown in FIG. 12 for three common combustible gases in air: methane (CH₄), propane (C₃H₈) and hydrogen (H₂).

In the non-coated state, the thermally conditioned sensors (having constant temperature coefficients of resistance and constant resistance values) require about 42.5 mW for operation at about 530°C. After coating with inert material and catalytic formulation, the coatings on the reference and active paddles, respectively, add about 8 to 10 mW more power to produce the gas sensitivities and linear signals desired. The observed 55 mW level of power of operation is in reasonable agreement with the calculated value of 48.1 mW (discussed above) for operating the sensor at 650°C.

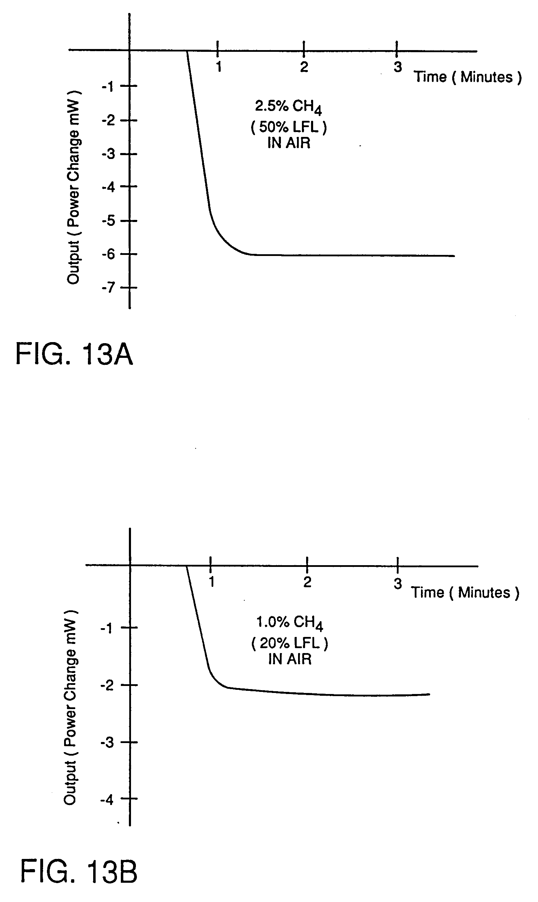

Tests similar to those conducted in connection with FIGS. 10-11 above were also carried with a sensor having a platinum based catalytic coating. FIGS. 13A and 13B show the good signals that were obtained with a platinum sensor. The power consumption for this sensor is higher than that for a palladium based sensor due to the higher operating temperatures, but is still lower than that for current commercial platinum bead sensors.

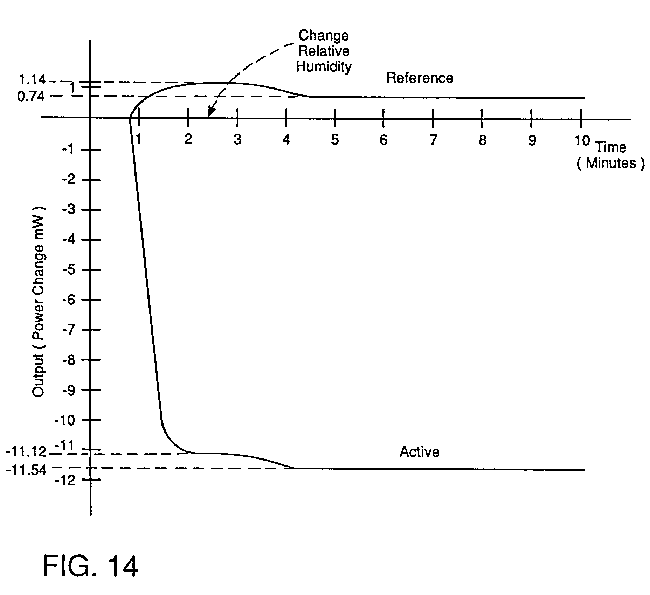

Tests were also conducted to determine the influence of humidity changes on the operation of the palladium based gas sensor. The reference and active elements of the gas sensor were, in the constant temperature mode of operation discussed above, exposed to 2.5% methane in air at a 79.8% relative humidity and the sensor signals measured. Thereafter, the relative humidity was changed to 28.6% and the measurements continued. A graph of the results is shown in FIG. 14. It can be seen that the sensor developed a net signal of 12.26 mW (1.14 mW-(-11.12 mW)) at the 79.8% relative humidity level and a net signal of 12.28 mW (0.74 mW-(-11.54 mW)) at the 28.6% relative humidity level. This test shows that the reference and active elements changed their output response with changing relative humidity, but these changes tracked each other to a relatively consistent degree. The change in the concentration of water vapor in the gas stream affects the total thermal conductivity of the gas mixture in contact with the surface of each paddle. This, in turn, changes the amount of power that must be compensated by the circuit. Since these small changes are effectively the same in each paddle, they are cancelled out and do not affect the net signal of operation.

Having described presently preferred embodiments of the invention, it is to be understood that it may be otherwise embodied within the scope of the appended claims.

## Claims

1. A low power catalytic combustible gas detector comprising:
a planar, microchip substrate having a rectangular active well and a similar, rectangular reference well extending therethrough between upper and lower surfaces of said substrate, with said wells separated from each other by at least 300 microns,
a thin insulating layer formed on the upper surface of said substrate,
a planar, rectangular active paddle suspended over said active well in about a midpoint thereof and substantially aligned with said insulating layer, said active paddle connected to said insulating layer by a planar, active electrode arm extending from a side of said active paddle to said insulating layer, and by at least one planar, active cross bar support extending from another side of said active paddle to said insulating layer, with said active paddle, active electrode arm and active cross bar support formed of an insulating material,
a planar, rectangular reference paddle suspended over said reference well in about a midpoint thereof and substantially aligned with said insulating layer, said reference paddle connected to said insulating layer by a planar, reference electrode arm extending from a side of said reference paddle to said insulating layer, and at least one planar, reference cross bar support extending from another side of said reference paddle to said insulating layer, with said reference paddle, reference electrode arm and reference cross bar support formed of an insulating material,
said active paddle further including an active resistive trace embedded therein and formed of at least one thin, meandering metal ribbon, said insulating layer including a pair of active bonding pads embedded therein and adjacent the active electrode arm, and a pair of active metal ribbon electrodes embedded within said active electrode arm and extending between separate of said active bonding pads and separate ends of said active resistive trace,
said reference paddle further including a reference resistive trace embedded therein and formed of a thin, meandering metal ribbon, said insulating layer including a pair of reference bonding pads embedded therein and adjacent the reference electrode arm, and a pair of reference metal ribbon electrodes embedded within said reference electrode arm and extending between separate of said reference bonding pads and separate ends of said reference resistive trace,
with said active paddle coated on an upper surface thereof with a catalytically active material, with said reference paddle coated on an upper surface thereof with a catalytically inactive material, with said reference and active paddles each having sides at least 100 microns in length but no greater than 300 microns in length, with said active and reference wells each defining an open area having a surface area at least ten times as large as the surface area of said associated reference and active paddles, and with said active and reference electrode arms and active and reference cross bar supports each having a width substantially narrower than the length of any side of the active and reference paddles, respectively, whereby the coatings on said paddles can each be raised to temperatures of 500°C. or higher when the resistive traces therein carry electrical power of no greater than 60 mW.

2. The low power catalytic combustible gas detector of claim 1 wherein the active and reference paddles, the active and reference electrode arms and the active and reference cross bar supports are each formed of the same insulating material as the insulating layer on the substrate.

3. The low power catalytic combustible gas detector of claim 2 wherein said substrate is formed of silicon and said insulating layer, said paddles, said electrode arms and said cross bar supports are formed of silicon dioxide.

4. The low power catalytic combustible gas detector of claim 1 wherein each of said resistive traces in said paddles includes a pair of parallel platinum ribbon traces.

5. The low power catalytic combustible gas detector of claim 1 wherein said active and reference metal ribbon electrodes and said active and reference bonding pads are formed of gold.

6. The low power catalytic combustible gas detector of claim 1 wherein said catalytically active material is a palladium based material.

7. The low power catalytic combustible gas detector of claim 1 wherein said catalytically active material is a platinum based material.

8. The low power catalytic combustible gas detector of claim 1 further including a pair of active cross bar supports and a pair of reference cross bar supports, with said cross bar supports extending perpendicularly from said associated paddle at opposed corners along a side opposite the side to which the associated electrode arm is connected.

9. The low power catalytic combustible gas detector of claim 1 further including four active cross bar supports and four reference cross bar supports, with each cross bar support connected to a different corner of an associated paddle and extending diagonal to said insulating layer on said substrate.
